Europäisches Patentamt

European Patent Office

Office européen des brevets

(11) Veröffentlichungsnummer: **0 043 873**
**B1**

(12) **EUROPÄISCHE PATENTSCHRIFT**

(45) Veröffentlichungstag der Patentschrift: 26.06.85

(21) Anmeldenummer: 80201239.3

(22) Anmeldetag: 29.12.80

(51) Int. Cl.⁴: **B 62 B 3/10**

(54) **Zusammenklappbarer Einkaufswagen.**

(43) Veröffentlichungstag der Anmeldung:
**20.01.82 Patentblatt 82/03**

(45) Bekanntmachung des Hinweises auf die
Patenterteilung:
**26.06.85 Patentblatt 85/26**

(84) Benannte Vertragsstaaten:
**AT BE CH DE FR GB IT LI LU NL SE**

(56) Entgegenhaltungen:
**AU-A- 485 208**
**US-A-2 901 262**
**US-A-3 375 018**
**US-A-3 774 929**
**US-A-4 059 285**

(73) Patentinhaber: **de Wit, Hendrik Cornelis**
**Rietwijkerstraat 5**
**NL-1059 VV Amsterdam (NL)**

(72) Erfinder: **de Wit, Hendrik Cornelis**
**Rietwijkerstraat 5**
**NL-1059 VV Amsterdam (NL)**

Courier Press, Leamington Spa, England.

**Beschreibung**

Die Erfindung bezieht sich auf einen Einkaufswagen, bestehend aus einem fahrbaren Gestell auf das mittels eines Gestänges mindestens ein Tragekorb für die Einkäufe montiert ist, wobei der Tragekorb abnehmbaar an dem Gestänge befestigt ist und das Gestänge auf dem Gestell zusammenklappbar ist, welche Gestänge einen in wesentlichen U-förmigen Bügel umfasst, dessen Beine in der Fahrstellung nach unten gerichtet und mit den freien Enden mittels eines ersten Scharniers drehbar am Gestell befestigt sind und die Mittelstange des U-förmigen Bügels sich in die Fahrstellung in Handhöhe befindet, so dass sie als Handgriff zum Fortbewegen des Wagens dienen kann, und die Beine des U-förmigen Bügels bestehen aus zwei mittels eines zweiten Scharniers drehbaren Gliedern welche mit Anschlägen für die gestreckte oder nahezu gestreckte Endstellung der Glieder versehen sind, und die beiden zweiten Scharnieren sich zwischen dem Gestell und der Unterseite des auf diesem befestigten Tragekorbs befinden und ferner für jedes Bein eine Schützstange vorgesehen ist, deren unteres Ende mittels eines dritten Scharniers drehbar am Gestell befestigt ist, und deren oberes Ende mittels eines vierten Scharnieres drehbar am oberen Glied befestigt ist, ferner das untere Glied eines Beins jenseits des zweiten Scharniers ein Verlängerungsstück besitzt, das zusammen mit dem oberen Glied des Beins als Anschlagmittel für die Stellung dient, in der die beiden Glieder gerade und gestreckt sind, wobei am oberen Glied zwischen dem zweiten und vierten Scharnier ein Schiebestück verschiebbar angebracht ist, das die Fixierung der Glieder eines Beins in gestreckter Stellung bewirkt, wenn es über das Verlängerungsstück geschoben wird, welche beide Schiebestücke durch eine Verbindungsstange mit einander fest verbunden sind.

Ein bekannter Einkaufswagen der obenbeschriebenen Art ist beschrieben in der Australischen Patentschrift AU—A—485.208. Dieser bekannte Einaufswagen besitzt aber einige Nachteile. So geschiet die Unterstützung des ersten Tragekorbs mittel des Henkels von einem im Untern des Gestells hingestellten Tragekorb. Dass heisst also dass man den ersten, oberen. Tragekorb nur verwenden kann wenn auch ein unteren Tragekorb anwesend ist. Der obere Tragekorb ist also nicht unabhängig zu verwenden. Zweitens ist es ein Nachteil dass keine Gewissheit darüber besteht ob der Benntzet des Einkaufswagens wohl oder nicht die Schiebestücke in die, die gestreckte Stellung der Glieder fixierende Position gebracht hat.

Die Aufgabe der Erfindung ist es einen Einkaufswagen der beschriebenen Art zu schaffen der die obenngenannten Nachteile nicht aufweist und darüher hinaus noch einige zusätzliche Vorteile bietet. Zu diesem Zweck dient gemäss der Erfindung die Verbindungsstange gleichzeitig als Stütze für die Unterseite des ersten Tragekorbs. Bei einer derartigen Ausführung eines Einkaufswagens kann der erste Tragekorb unabhängig davon ob noch ein unteren Tragekorb anwesend ist oder nicht zuverlässig am Gestänge aufgehängt worden. Dies ist aber nur möglich wenn die Verbindungsstange sich in ihrer niederen Position, also in der Fixierstellung befindet.

Die Erfindung ist besonders dazu geeignet dass ein zweiter Tragekorb vorgesehen wird, der abnehmbar am ersten Tragekorb befestigt werden kann, welcher zweite Tragekorb in den ersten Tragekorb passt. Hierdurch kann ein Kunde einen Einkaufswagen gemäss der Erfindung mit einem Tragekorb kaufen, wenn seine Familie klein ist, und mit zwei Tragekörben, wenn seine Familie grösser ist.

Im Rahmen der Erfindung ist es praktisch, wenn der zweite Tragekorb in den ersten passt.

Ferner ist es vorteilhaft, wenn das Gestell ein horizontales Rahmengitter hat, das als Trageboden für Einkäufe dienen kann. Dadurch wird das Fassungsvermögen des Einkaufswagens im Sinne der Erfindung beträchtlich vergrössert; ausserdem können auf diese Weise empfindliche und unempfindliche Artikel gesondert untergebracht werden.

Zur Verdeutlichung der Erfindung wird nachstehend unter Verweisung auf die Zeichnung ein Ausführungsbeispiel beschrieben.

Figur 1 ist eine Seitenansicht des Einkaufswagens gemäss der Erfindung im Gebrauchszustand;

Figur 2 ist eine Rückansicht in Richtung des Pfeils II in Figur 1;

Figur 3 zeigt das Gestell mit dem Gestänge ohne die Tragekörbe mit zurückgeschobenen Schiebestücken in der Anfangsstellung beim Zusammenklappen.

Figur 4 zeigt das Gestell mit dem Gestänge in ganz zusammengeklapptem Zustand.

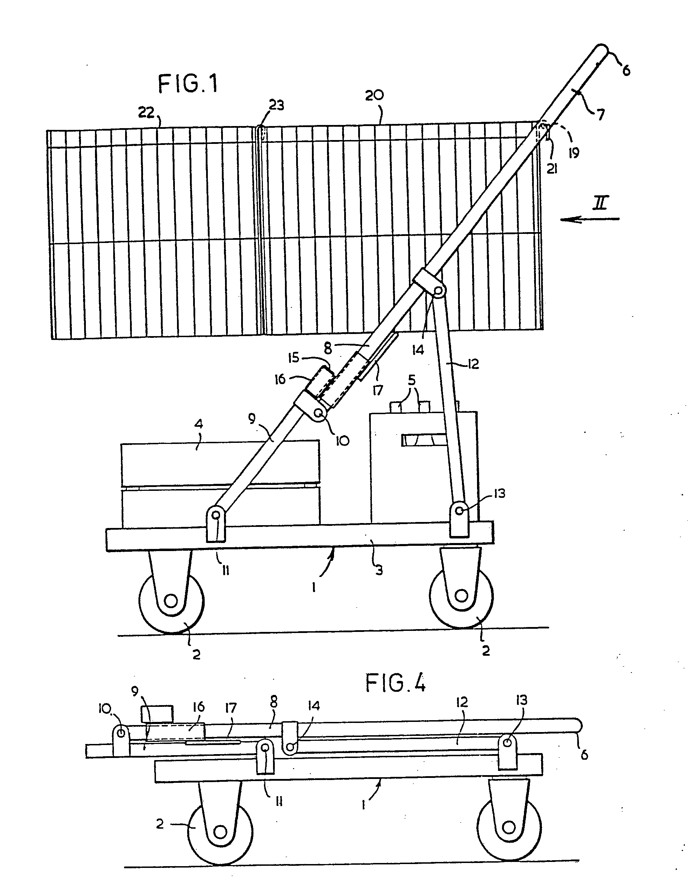

In Figur 1 ist mit 1 das Gestell bezeichnet, das auf Schwenkrädern 2 fahrbar ist. Das Gestell 1 hat ein Rahmengitter 3, das einen Boden bildet, auf den schwere Gegenstände wie Flaschenkästen 4 oder flaschen 4 gestellt werden können. Das Gestänge besteht aus einem U-förmigen Bügel 6, dessen Beine 7 aus je zwei Gliedern 8 und 9 bestehen. Die Beinglieder können mittels eines Scharniers 10 geknickt werden, während der Bügel 6 als Ganzes mittels eines Scharniers 11 drehbar an dem Gestell 1 befestigt ist. Ferner wird der Bügel 6 durch eine Stützstange 12 gestützt, die mittels des Scharniers 13 mit dem Gestell und mittels des Scharniers 14 mit dem Bügel drehbar verbunden ist.

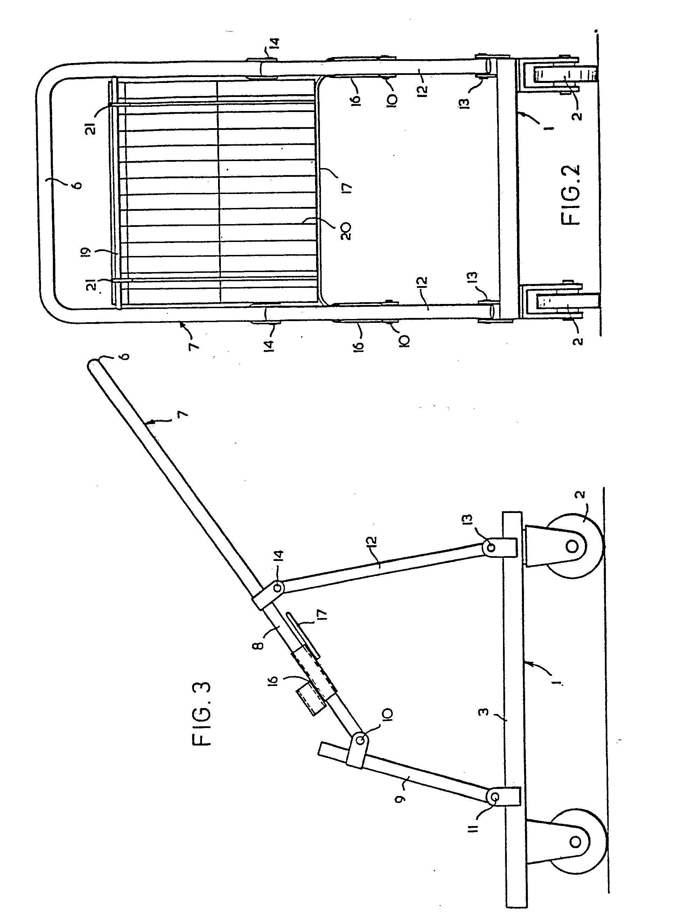

Das Glied 9 setzt sich über das Scharnier 10 hinaus in einem Verlängerungsstück 15 fort, das bei gestrecktem Stand der Glieder 8 und 9 wie dargestellt an dem Glied 8 anliegt. Hierdurch wird die gestreckte Endstellung bestimmt. Zur Fixierung dieser gestreckten Endstellung dienen die Schiebestücke 16, die auf den Gliedern 8 des Bügels verschoben werden können und das Einknicken der Glieder verhindern. Die Schiebestücke 16 sind miteinander durch eine Verbindungsstange 17 verbunden (sie auch Figur 2). Der Bügel hat ferner in der Nähe des Hanggriffteils eine Querstange 19 (siehe auch Figur 2). Der tragekorb 20 hängt mit Haken 21 an dieser Querstange 19 und ruht mit der Unterseite auf der Verbindungsstange 17 der Schiebestücke 16. Hierdurch werden die Schiebestücke gleichzeitig in der Fixierstellung arretiert. Am ersten Tragekorb hängt mittels Haken 23 ein zweiter Tragekorb.

In den Figuren 3 und 4 ist das Zusammenklappen des Gestänges dargestellt. Nach dem Abnehmen der Tragekörbe kann der Benutzer mühelos die Schiebestücke 16 nach oben schieben, indem er an der Verbindungsstange 17 zieht. Die Verlängerungsstücke 15 werden dadurch frei, so dass die Beine 7 bei den Scharnieren 10 geknickt werden können, wie in Figur 3 dargestellt. Bei weiterem Knicken entsteht die zusammengeklappte Stellung, die in Figur 4 dargestellt ist. Der Tragekorb 22 passt in den Tragekorb 20, so dass man nur zwei Teile übrigbehält, die sich auch in einem kleinen Raum, im Auto oder im Haus, leicht verstauen lassen.

**Patentansprüche**

1. Einkaufswagen, bestehend aus einem fahrbaren Gestell (1) auf das mittels eines Gestänges (6, 12) mindestens ein Tragekorb (20, 22) für die Einkäufe montiert ist, wobei der Tragekorb (20) abnehmbar an dem Gestänge (6, 12) befestigt ist und das Gestänge (6, 12) auf dem Gestell (1) zusammenklappbar ist, welches Gestänge (6, 12) einen in wesentlichen U-förmigen Bügel (6) umfasst, dessen Beine (7) in der Fahrstellung nach unten gerichtet und mit den freien Enden mittels eines ersten Scharniers (11) drehbar am Gestell (1) befestigt sind und die Mittelstange des U-förmigen Bügels (6) sich in der Fahrstellung in Handhöhe befindet, so dass sie als Handgriff zum Fortbewegen des Wagens dienen kann, und die Beine (7) des U-förmigen Bügels (6) aus zwei mittels eines zweiten Scharniers (10) drehbaren Gliedern (8, 9) bestehen welche mit Anschlägen (15) für die gestreckte oder nahezu gestreckte Endstellung der Glieder (8, 9) versehen sind, und die beiden zweiten Scharniere (10) sich zwischen dem Gestell (1) und der Unterseite des auf diesem befestigten Tragekorbs (20) befinden und ferner für jedes Bein (7) eine Stützstange (12) vorgesehen ist, deren unteres Ende mittels eines dritten Scharniers (13) drehbar am Gestell (1) befestigt ist, und deren oberes Ende mittels eines vierten Scharniers (14) drehbar am oberen Glied (8) befestigt ist, ferner das untere Glied (9) eines Beins (7) jenseits des zweiten Scharniers (10) ein Verlängerungsstück (15) besitzt, das zusammen mit dem oberen Glied (8) des Beins (7) als Anschlagmittel für die Stellung dient, in der die beiden Glieder (8, 9) gerade und gestreckt sind, wobei am oberen Glied (8) zwischen dem zweiten (10) und vierten (14) Scharnier ein Schiebestück (16) verschiebbar angebracht ist, das die Fixierung der Glieder (8, 9) eines Beins (7) in gestreckter Stellung bewirkt, wenn es über das Verlängerungsstück geschoben wird, welche beide Schiebestücke (16) durch eine Verbindungsstange (17) mit einander fest verbunden sind, dadurch gekennzeichnet dass die Verbindungsstange (17) gleichzeitig als Stütze für die Unterseite des ersten Tragekorbs (20) dient.

2. Einkaufswagen nach Anspruch 1, dadurch gekennzeichnet, dass ein zweiter Tragekorb (22) vorgesehen ist, der abnehmbar am ersten Tragekorb (20) befestigt werden kann, welcher zweite Tragekorb (22) in den ersten Tragekorb (20) passt.

3. Einkaufswagen nach einem der vorstehenden Ansprüche, dadurch gekennzeichnet, dass das Gestell (1) ein horizontales Rahmengitter (3) hat, dass unmittelbar als Trageboden für Einkäufe dienen kann.

**Revendications**

1. Chariot à emplettes pliable comportant un châssis roulant (1) et au moins un panier (20, 22) à emplettes monté sur ce chassis (1) au moyen de barres de support (6, 12), dans lequel le panier (20) est fixé de manière amovible à ces barres de support (6, 12), lesquelles sont rabattables sur le châssis (1) et comportent un arceau (6) sensiblement en forme de U, dont les montants (7) sont dirigés vers le bas en position de marche du chariot et sont articulés sur le châssis (1) au moyen d'une première charnière (11) à leur extrémité, la partie centrale de l'arceau en U (6) se trouvant à la hauteur des mains dans la position de marche du chariot de façon à pouvoir servir de poignée pour faire avancer le chariot, les deux montants (7) de l'arceau en U (6) étant constitués chacun deux éléments (8, 9) articulés entre eux au moyen d'une deuxième charnière (10) et pourvus d'organes de butée (15) pour déterminer une position droite ou presque droite de ces éléments (8, 9), ces deuxièmes charnières (10) étant situées entre le chassis (1) et la face inférieure du panier (20) monté sur celui-ci, les barres de support comprenant en outre pour chacun des montants (7) une barre d'appui (12) dont l'extrémité inférieure est articulée sur le chassis (1) au moyen d'un troisième charnière (13) et dont l'extrémité supérieure est articulée sur l'élément supérieur (8) du montant au moyen d'une quatrième charnière (14), l'élément inférieur (9) d'un montant (7) étant pourvu, au-delà de la deuxième charnière (10) d'un prolongement (15) qui sert d'organe de butée par rapport à l'élément supérieur pour la position dans laquelle les deux éléments (8, 9) sont alignés, l'élément supérieur (8) étant équipé, entre la deuxième (10) et la quatrième charnière (14), d'une piece coulissante (16) qui assure la fixation des deux éléments (8, 9) d'un montant (7) dans leur position droite quand elle est emboîtée sur ledit prolongement (15), les deux pieces coulissantes (16) étant reliées rigidement par une barre de liaison (17), caracterisé en ce que la barre de liaison (17) constitue en même temps un appui la face inférieure du premier panier (20).

2. Chariot à emplettes pliable selon la revendication 1, caracterisé en ce qu'il comporte un second panier (22), agencé pour être fixé de manière amovible au premier panier (20), ainsi que pour être mis dans le premier panier (20).

3. Chariot à emplettes pliable selon l'une quelconque des revendications précédentes, caracterisé en ce que le chassis (1) comporte une grille horizontale (3) qui est directement utilisable comme plateau pour supporter des emplettes.

## Claims

1. A collapsible shopping cart comprising a movable frame (1) on which is mounted via a support structure (6, 12) at least one basket (20, 22) for purchases, said basket (20) being fastened removably to said support structure (6, 12), said support structure (6, 12) being collapsibly mounted on said frame (1) and said support structure (6, 12) comprising a U-shaped handle (6) having a middle portion, the legs (7) of said handle (6) extending downwardly at an angle in the operating state of said cart, the free ends of said legs (7) being respectively pivotally connected to said frame (1) by means of a first hinge (11), said middle portion of said U-shaped handle (6) being located at hand level in the operating state and forming a handgrip for pushing said cart, each leg (7) of said handle (6) respectively comprising an upper (8) and a lower member (9) which are pivotally interconnected by means of a second hinge (10), the members (8, 9) of each leg (7) being provided with abutment means (15) for the at least nearly extended final position of said members (8, 9), said second hinges (10) being located between said frame (1) and the underside of said basket (20) in the operating state of same, further being provided for each leg (7) a respective support rod (12) and the lower end of same being pivotally connected to said frame (1) by means of a third hinge (13), the upper end of said support rod (12) being pivotally connected to said upper member (8) by means of a fourth hinge (14), further the lower member (9) of a leg (7) being provided with an extension (15) located on that side of said second hinge (10) remote from said first hinge (11), said extension serving, in cooperation with said upper member (8) of said leg (7) in said at least nearly extended final position of said members (8, 9) as said abutment means (15) and being included a shift piece (16) displaceably mounted on said upper member (8) between said second hinge (10) and said fourth hinge (14), said shift piece (16) being adapted to be slid over said extension (15) to effect fixing of said members (8, 9) of a given leg (7) in said extended final position, which two shift pieces (16) are rigidly interconnected by a connecting rod (17), characterised in that said connecting rod (17) simultaneously serves as a support for the underside of said at least one basket (20).

2. A collapsible shopping cart according to claim 1, characterised in that a second basket (22) is included which is removably fastened to said first basket (20), which second basket (22) fits in said first basket (20).

3. A collapsible shopping cart according to claim 1 or 2, characterised in that said frame (1) includes a horizontal rack (3) which may serve directly as a supporting bottom for purchases.

FIG.1

FIG.4

FIG.2

FIG. 3